# EUROPEAN PATENT SPECIFICATION

(11) **EP 1 947 711 B1**
(45) Date of publication and mention of the grant of the patent: **11.07.2012**
(21) Application number: 08006222.7
(22) Date of filing: 13.09.2002
(51) Int. Cl.: H01M 2/16, H01M 4/66, H01M 4/70, H01M 10/26, H01M 10/28, H01M 10/30, H01M 4/24, H01M 4/26, H01M 2/18, H01M 4/76

(54) **Three-dimensional battery and its electrode structure and method for producing electrode material of three-dimensional battery**
Dreidimensionale Batterie und ihre Elektrodenstruktur sowie Verfahren zur Herstellung von Elektrodenmaterial von dreidimensionalen Batterien
Batterie tridimensionnelle et sa structure d'électrode et procédé de production du matériel d'électrode de la batterie tridimensionnelle

(30) Priority: 19.09.2001 JP 2001284489; 19.09.2001 JP 2001284491
(43) Date of publication of application: 23.07.2008
(62) Divisional of application: 02799469.8
(73) Proprietor: KAWASAKI JUKOGYO KABUSHIKI KAISHA, Kobe shi, Hyogo 650-8670 (JP); Osaka Gas Company Limited, Osaka-shi Osaka 541-0046 (JP)
(72) Inventor: Tsutsumi, Kazuo, Kobe-shi, Hyogo 651-2215 (JP); Nishimura, Kazuya, Kawasaki-cho, Akashi-shi, Hyogo 673-8666 (JP); Mitsuda, Susumu, Hikami-gun, Hyogo 669-3122 (JP); Tanigawa, Takahito, Kawasaki-cho, Akashi-shi, Hyogo 673-8666 (JP)
(74) Representative: Whitlock, Holly Elizabeth Ann

(56) References cited:
- WO-A-84/02230
- US-A- 4 048 397
- US-A- 4 540 642
- US-A- 5 426 004

## Description

### TECHNICAL FIELD

The present invention relates to a high power type three-dimentional battery which is based on a bellows-shaped unit and which is capable of increasing its size easily.

### BACKROUND ART

The present invention relates to a three-dimentional battery. The problem to be solved by the present invention is classified into the following problem in view of prior arts.

A first example problem is to provide a three-dimensional battery which requires a less number of component parts than conventional and which reduces assembly time and assembly cost. Additionally, the first example problem is to provide an electrode structure of the three-dimensional battery and a method for producing an electrode material of the three-dimensional battery. Furthermore, the first example problem is to provide, at low cost, a three-dimensional battery which has a large current collecting area and which is capable of charging and discharging at high rate.

A second problem is to provide a high power type three-dimensional battery capable of increasing its size easily and generating high output power without undergoing a drop in performance due to the increase in size.

Hereinafter, the second problem will be discussed by comparison with prior art.

### PRIOR ART AND SECOND PROBLEM

Japanese Patent Publication No. 3052401 discloses a so-called three-dimensional battery comprising a powdered or particulate active material. International Publication WO 00/59062 discloses a layered three-dimensional battery. A three-dimensional battery in which a particulate active material Is filled for formation of a fixed layer is disclosed in Japanese Patent Provisional Publication No.2002-141101 and Japanese Patent Provisional Publication No. 2002-141104.

In a nickel-hydrogen secondary battery of the conventional structure, nickel hydroxide which serves as a cathode of the nickel-hydrogen secondary battery does not have electrical conductivity. To cope with this, the surface of the nickel hydroxide is coated with a cobalt compound which is electrically conductivity. This is filled into a foamed nickel sheet for the purpose of shape support and electrical conduction. Since it is impossible to achieve adhesive joining of the foamed nickel sheet and the nickel hydroxide in an alkali electrolytic solution, separation is prevented by application of physical pressure from the outside. Additionally, in order to reduce the degree of electrical resistance between the foamed nickel sheet and the nickel hydroxide, it is required that the foamed nickel sheet be reduced in thickness. To this end, a foamed nickel sheet having a thickness of about 1.1 mm, into which paste -like nickel hydroxide has been filled, is so compacted as to have a thickness of about 0.6 mm. Additionally, in order to obtain smooth ion diffusion, the distance between the cathode and the anode should be as small as possible. Therefore, the thickness of battery structure comprising the cathode, the separator and the anode does not exceed 2 mm.

For the case of nickel-hydrogen secondary batteries of the conventional structure, these is no other way, indeed, in order to achieve the increase in size while meeting the above-described requirements, than to increase the area of the cathode and the anode without changing the thickness of the foamed nickel sheet. However, there is the limit of increasing the area per sheet. To cope with such limitation, the number of foamed nickel sheets is increased and multiple foamed nickel sheets are connected. In this case, welding connection of conducting wires (nickel plates or the like) is employed as a connecting technique, which, however, results in the increase in electrical resistance. Accordingly, the performance of the large-scale battery falls.

Furthermore, in the structure of a conventional dry battery, a thinly-compacted planar active material sheet, sandwiched in between separators, is rolled up into a cylindrical form. The rolled-up sheet is filled into a battery cell. For example, in a nickel-hydrogen secondary battery, a planar active material (a sheet into which hydrogen-occuluding alloy as an anode has been filled, for the case of nickel-hydrogen battery) which is in direct contact with a battery cell and which is the outermost surface, has a large contact area with a current collector (the battery cell is shared with an anode current collector), and a sheet, into which a cathode active material (nickel hydroxide) has been fitted, is connected by welding to a fine conducting wire (a nickel plate or the like). Further, it is connected by welding to an external terminal. The problem arising here is that there are two welds and the cross sectional area of the conducting wire (nickel plate or the like) establishing connection between the active material and the external terminal is narrow.

That is, the existence of welds increases electrical resistance, production cost and manufacturing time. Additionally, since the cross sectional area of the conducting wire (nickel plate or the like) establishing connection between the active material and the external terminal is narrow, it is inevitable that both electrical resistance and heat release value increase when a heavy current flows.

Additionally, in the structure of a conventional industrial battery, for example, in the case of NiCd secondary battery, thinly-compacted, planar active material sheets are layered one upon the other so that the cathode, the separator, the anode, the separator, the cathode··· in such order, and a fine conducting wire (nickel plate or the like) is connected to each planar active material sheet, and a group of the cathodes are connected by welding to an external terminal while a group of the anodes are connected by welding to an external terminal. The problem arising here is that electrical resistance, production cost, and manufacturing time increase because the plural planar active material sheets are connected by welding to the external terminal.

The performance of single dry battery is satisfactory. However, if plural dry batteries are connected together in series or parallel when a large capacity battery is required, the output voltage drops due to the resistance of contact with external terminals. As a result, the battery becomes poor in performance. On the other hand, for the case of industrial batteries being originally large in size, they have problems with their basic structure, in other words there are many welding points. Accordingly, high-performance batteries are not obtained.

In view of the above-described drawbacks, the present invention has been devised. Accordingly, the second problem to be solved by the present invention is to provide a high power type three-dimensional battery capable of increasing its size easily and generating high output power without undergoing a drop in performance due to the increases in size, and reducing production cost and manufacturing time.

US 4,540,642 discloses a lithium alloy iron sulfide cell design providing loop-like positive and negative sheet metal current collectors electrically insulated from one another by separator means. The separator electrically insulates the electrode subassemblies from one another, and also support the negative electrode subassembly relative to the positive electrode subassembly and/or housing.

### DISCLOSURE OF THE INVENTION

### INVENTIONS FOR SOLVING THE SECOND PROBLEM

In order to solve the second problem, the present invention provides a power type three-dimensional battery as set out in claim 1.

Preferably the ion permeable current collector is disposed on a surface of the cathode and anode active materials and inside thereof.

The ion permeable current collector can be made of a material which has voids therein, which permits passage of ions, and which has electrical conductive properties. For example, the ion permeable current collector material is selected from the group consisting of foamed nickel metal, a nickel metal mesh, nickel-plated punching metal, metal such as expanded metal and the like, nickel-plated foamed resin such as urethane and the like, nickel-plated porous material made of polyethylene, polypropylene, nylon, cotton, carbon fibers and the like, nickel-plated inorganic fibers made of silica, alumina and the like, nickel-plated organic fibers, nickel-plated felt, and nickel-plated foil made of an inorganic substance such as mica.

As the active material, active material of all kinds may be used, regardless of the type of battery and regardless of cathode or anode. For example, nickel hydroxide and hydrogen-occluding alloy which serve as a cathode active material and as an anode active material, respectively in a nickel-hydrogen secondary battery may be used.

As the electrically conductive filler, either any one selected from the group consisting of carbon fibers, nickel-plated carbon fibers, carbon particles, nickel-plated carbon particles, nickel-plated organic fibers, nickel-plated inorganic fibers made of silica, alumina and the like, nickel-plated foil made of an inorganic substance such as mica, nickel in fiber form, nickel particles, and nickel foil or any combination thereof may be used.

Additionally, the resin which is added to the active material may be selected from the group consisting of a thermoplastic resin having the softening temperature of which is up to 120 °C, a resin having the curing temperature of which ranges from room temperature up to 120 °C, a resin dissolvable in a solvent having the evaporating temperature of which does not exceed 120 °C, a resin dissolvable in a water-soluble solvent, and a resin dissolvable in an alcohol-soluble solvent. For example, in the case where a nickel hydroxide as active material is used, its activity is lost at temperatures above 130 °C. therefore requiring that various processes be carried out at temperatures below 130 °C. In addition, since active materials are used in an alkali electrolyte solution, alkali resistance is needed for the active materials.

As the thermoplastic resin having a softening temperature of up to 120 °C, any one selected from the group consisting of polyethylene, polypropylene, and ethylene-vinyl acetate copolymer (EVA) may be used. As the resin having a curing temperature ranging from room temperature up to 120 °C, reaction-curing resin (e.g., epoxy resin, urethane resin, unsaturated polyester resin and the like), thermosetting resin (e.g., phenol resin and the like), or the like may be used. As the resin dissolvable in a solvent having an evaporating temperature that does not exceed 120 °C, any one of the foregoing thermoplastic resins may be used. The solvent-soluble resin is dissolved in a solvent, and added to an active material substance, and the solvent is removed by evaporation, extraction, or other technique. Additionally, as the resin dissolvable in a water-soluble and extractable solvent, any one selected from the group consisting of polyether sulfone resin (PES), polystyrene, polysulfone, polyacrylonitrile, polyvinylidene fluoride, polyamide, polyimide and the like may be used. As the resin dissolvable in an alcohol-soluble and extractable solvent, acetylcellulose, oxide phenylene ether (PPO), or the like may be used.

By virtue of the above-described construction, the present invention provides the following advantages.
(1) Because of the arrangement that cathode active materials and anode active materials are disposed into being bellows-shaped and facing each other across a separator, the distance between these active materials is reduced, and the distance for which electrons move is reduced, thereby achieving high output powers. In addition, the length for which ions diffuse is reduced, thereby achieving excellent diffusion of ions. Besides, when gas is generated from the active material because of overcharge or the like, the gas flows to the opposite electrode and is likely to be consumed easily, and sealing can be established easily.
(2) Because of the use of cathode and anode active materials each of which is coated with an ion permeable current collector made of porous nickel or the like, the distance between the active materials and: the current collector is reduced, and not only the distance for which electrons move is reduced, but also the current collecting area is increased, thereby providing a high performance battery whose electrical resistance is small.
(3) By the arrangement that a battery cell is loaded with a plurality of bellows-shaped units, the increase in size (magnification of scale) can be achieved easily and, in addition, since there are no welds causing electrical resistance to increase, the drop in performance due to the increase in size will not take place.
   Additionally, the production cost and the production time can be reduced.
(4) Since the separator and the ion permeable current collector exist relatively plentifully in the inside of the battery cell, the filling amount of each of cathode and anode active materials per unit volume is small, thereby making it possible to hold a plenty of electrolytic solution within the cell. Accordingly, the dry out phenomenon, in which a solid-liquid reaction (a cell reaction) will no longer occur due to electrolytic solution depletion, is unlikely to occur.
(5) If the thickness of active material is reduced because high power battery performance is required, this relatively increases the ratio of separator and ion permeable current collector. As a result, despite the drop in volume energy density it becomes possible to obtain a high power battery.
(6) On the other hand, if the thickness of active material is increased because high power battery performance is not required, this relatively reduces the ratio of separator and ion permeable current collector. As a result, it becomes possible to obtain a battery having a high volume energy density.
(7) Finally, any changes to the battery specification can be made just by increasing or decreasing the thickness of active material, and desired battery specifications can be obtained easily.

### BRIEF DESCRIPTION OF THE DRAWINGS

Figure 1 is a schematic view showing in cross section an arrangement of an example of a battery having a particulate cathode active material and a particulate anode active material;
Figure 2 is a view diagrammatically showing an example of a vessel structure of a three-dimensional battery of the layered type;
Figure 3 is a top plan view showing an example of a current collector (a dividing wall) provided with projected portions;
Figure 4 is a side view showing an example of a current collector (a dividing wall) provided with projected portions;
Figure 5 is a perspective view showing an example of a current collector (a dividing wall) having a cooling structure;
Figure 6 is a view diagrammatically showing an example (a basic unit) of a high power type three-dimensional battery;
Figure 7 is a view diagrammatically showing another example (a basic unit) of the high power type three-dimensional battery;
Figure 8 is a view diagrammatically showing an example (four basic units loaded in parallel) of a high power type three-dimensional battery;
Figure 9 is a view diagrammatically showing an example (laminated in series four layers each comprising four basic units loaded in parallel) of a high power type three-dimensional battery;
Figure 10 is a view diagrammatically showing an example (a basic unit with an active material of the thick type) of a high power type three-dimensional battery;
Figure 11 is a view diagrammatically showing an example (a basic unit) of a high power type three-dimensional battery;
Figure 12 is a view diagrammatically showing another example (two basic units loaded in parallel) of the high power type three-dimensional battery;
Figure 13 is a partially enlarged view diagrammatically showing an example of a high power type three-dimensional battery in accordance with an embodiment of the present invention;
Figure 14 is a partially enlarged view diagrammatically showing another example of the high power type three-dimensional battery in accordance with the embodiment of the present invention;
Figure 15 is a partially enlarged view diagrammatically showing still another example of the high power type three-dimensional battery in accordance with the embodiment of the present invention;
Figure 16 is a partially enlarged view diagrammatically showing a further example of the high power type three-dimensional battery in accordance with the embodiment of the present invention; and
Figure 17 is a partially enlarged view diagrammatically showing a still further example of the high power type three-dimensional battery in accordance with the embodiment of the present invention.

### BEST MODE FOR CURRYING OUT THE INVENTION

Hereinafter, embodiments of the present invention will be described. It is to be understood that the present invention is not limited to the following embodiments at all. Adequate modifications of the present invention are possible to make.

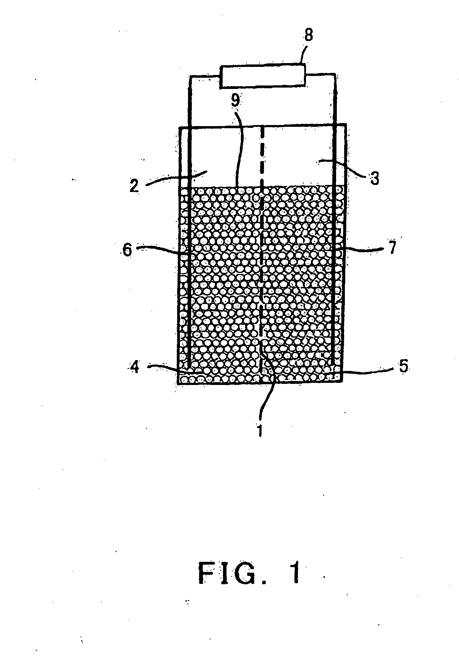

In the first place, the details of the cell reaction of a three-dimensional battery will be explained with reference to Figure 1.

Figure 1 shows an example of a battery having a cathode active material in the form of particles and an anode active material in the form of particles. As shown in Figure 1, an anode vessel 2 and a cathode vessel 3 are so defined as to face each other across an ion permeable filter (separator) 1. An anode active material 4 in particle form is filled into the anode vessel 2, together with an electrolyte solution. On the other hand, a cathode active material 5 in particle form is filled into the cathode vessel 3, together with an electrolyte solution. These active materials are present as fixed layers in the respective electrolyte solutions. In Figure 1, each active material particle is show such that it has the same size as the other. In fact, these active material particles naturally differ in size from one another.

The separator 1 is a filter which has electrical insulation properties and which permits passage of ions therethrough, and is a membrane which does not permit passage of powdered and particulate material. As the material of the separator 1, for example, unglazed pottery, ion exchange resin membrane or high polymer fabric may be used.

Furthermore, an anode current collector 6 which is an electrical conductor is disposed in the inside of the anode vessel 2, while a cathode current collector 7 which is an electrical conductor is disposed in the inside of the cathode vessel 3. The current collectors 6 and 7 are connected to a load means 8 (in the case of discharging) or to a power generating means 8 (in the case of charging). Reference numeral 9 denotes an electrolyte solution interface.

Next, with respect to the battery of the present embodiment, charging and discharging mechanisms will be described below.

### CHARGING

Electrons are supplied from the anode current collector 6 by application of voltage to the battery. An electron released from the anode current collector 6 moves directly or through a powered and particulate active material to the powdered and particulate active material of the anode and reacts. An ion generated by the reaction passes through the separator 1 and moves into the cathode vessel 3. In the cathode vessel 3, the ion reacts with the powdered and particulate active material of the cathode and discharges an electron. The electron moves directly or through the powdered and particulate material to the cathode current collector 7, and is delivered to the power generating means 8.

### DISCHARGING

Electrons are supplied from the anode current collector 6 by application of load to the battery. An active material positive-ionized in the inside of the anode vessel 2 discharges electrons. An electron moves directly or through a powdered and particulate material to the anode current collector 6. An ion generated by the reaction passes through the separator 1 and moves into the cathode vessel 3. In the cathoe vessel 3, the ion reacts with the powdered and particulate active material of the cathode and with an electron. An electron moves directly or through the powdered and particulate material to the cathode current collector 7, and is supplied to the load means 8.

### 1) EXAMPLES FOR SOLVING THE FIRST PROBLEM

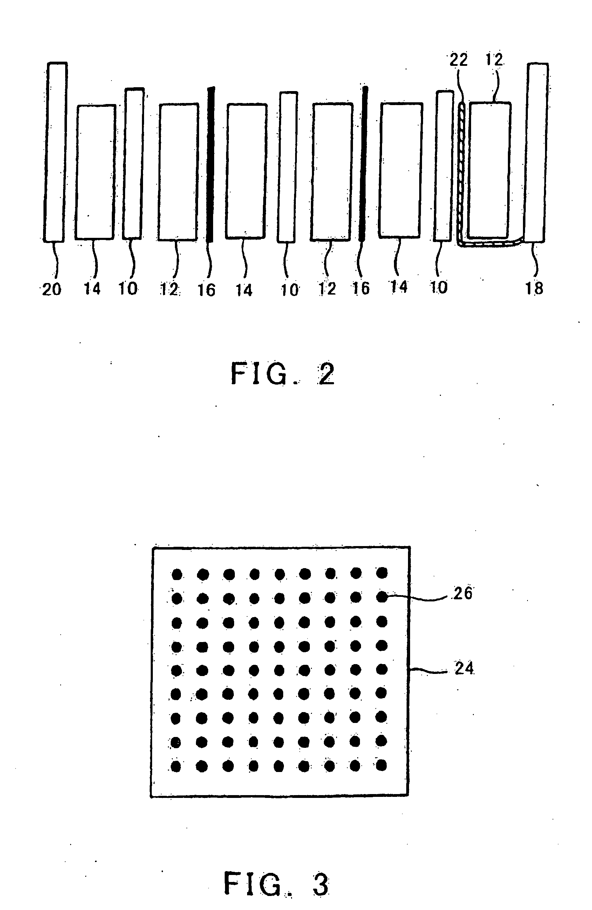

Referring next to Figure 2, is shown diagrammatically an example of a vessel structure of a three-dimensional battery of the layered type. Figure 2 shows a three-layered type three-dimensional battery. Cathode and anode vessels are formed through a separator 10 which undergoes no degeneration such as corrosion in an alkali electrolyte solution and which is capable of providing electrical insulation and of permitting passage of ions therethrough. A cathode active material 12 is loaded into the cathode vessel cell, together with an electrolyte (KOH, NaOH, SOH and the like) solution, while an anode active material 14 is loaded into the anode vessel, together with an electrolyte (KOH, NaOH, LiOH and the like) solution. Each unit battery consisting of a cathode vessel and an anode vessel, is layered one upon the other in series through a respective dividing wall 16 made of a material which undergoes no degeneration such as corrosion in an alkali electrolyte solution, which does not permit passage of ions, and which has electrical conductive properties, and a cathode current collector 18 in contact with the cathode active material 12 is disposed in a vessel at one end while an anode current collector 20 in contact with the anode active material 14 is disposed in a vessel at the other end. The cathode current collector 18 and the anode current collector 20 are each made of a material which undergoes no degeneration such as corrosion in an alkali electrolyte solution, which does not permit passage of ions, and which has electrical conductive properties, and electricity is taken outside through these current collectors.

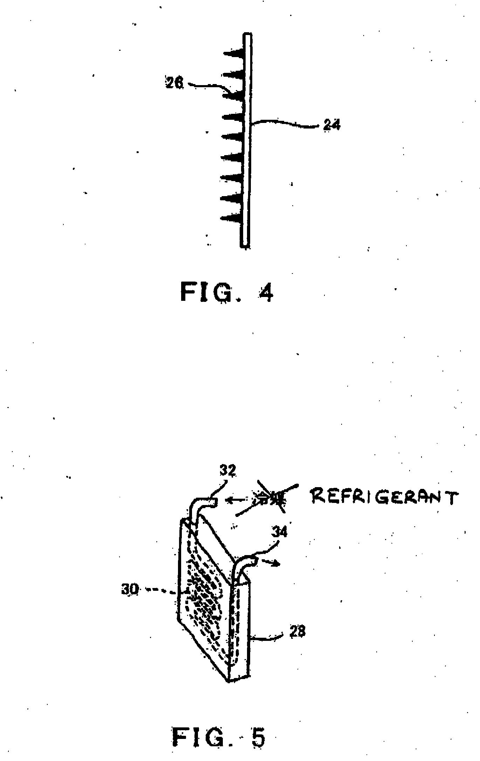

As the material of the separator 10, a textile or nonwoven cloth made of any one of polytetrafluoroethylene, polyethylene, polypropylene, nylon and the like or membrane filter may be used. As the material of each of the dividing wall 16, the cathode current collector 18, and the anode current collector 20, a nickel metal plate, a nickel metal foil, carbon, nickel-plated iron, nickel-ptaled stainless steel, nickel-plated carbon and the like may be used. Additionally, the dividing wall 16, the cathode current collector 18, and the anode current collector 20 may be shaped like a flat plate. More preferably, these components are provided with projected portions in needle, plate, wave, particle, or the like form for the purpose of providing an increased current collecting area. For example, as shown in Figures 3 and 4, it is possible to provide a current collector (or a dividing wall) 24 with projected portions 26. Additionally, by the arrangement that refrigerant is made to flow in the inside of each of the dividing wall 16, the cathode current collector 18, and the anode current collector 20, it becomes possible to provide them with a cooling structure. For example, Figure 5 shows an example cooling structure in which a bellows-shaped heat transfer tube 30, through which refrigerant flows, is disposed in the inside of a plate-like current collector (or a dividing wall) 28. Reference numeral 32. indicates a refrigerant inlet port. Reference numeral 34 indicates a refrigerant outlet port.

In addition to the above, preferably an ion permeable current collector, which has voids therein, which permits passage of ions therethrough, and which is electrically conductive, is added as a current collector for bypass, for providing an increased current collecting area by increasing the area of contact with the active material. As the material of such a current collector, a nickel metal mesh, a mesh-like body made of nickel-plated iron or nickel-plated stainless steel (for example, punching metal, expanded metal and the like), foamed nickel metal, nickel-plated foamed resin, nickel-plated carbon fibers, nickel-plated organic fibers, nickel-plated felt, nickel-plated inorganic fibers made of silica, alumina and the like, or nickel-plated foil made of inorganic substance such as mica may be used. Referring to Figure 2, is shown an arrangement by way of example in which an ion permeable current collector 22 is interposed between the separator 10 and the cathode active material 12 and the ion permeable current collector 22 is connected to the cathode current collector 18 to term a single current collector. Such an ion permeable current collector may be disposed on the separator side so that larger areas are brought into contact with the active material thereby increasing the current collecting area.

In the above-described three-dimensionai battery, active material substances of all kinds may be used as an active material which causes a cell reaction, regardless of the type of battery and regardless of cathode or anode. For example, for the case of nickel-hydrogen batteries, the cathode active material 12 comprises nickel hydroxide and the anode active material 14 comprises a hydrogen-occluding alloy. Additionally, for the case of NiCd batteries, the cathode active material 12 comprises nickel hydroxide and the anode active material 14 comprises cadmium.

The active material may be in the form of powders. Alternatively, the active material may made of a particulate or plate-shaped material with an electrically conductive, filler and a resin. The active material is combined with at least two of a separator, a dividing wall, and a current collector (including ion permeable current collector). And such a mixture is subjected to being formed integrally with one another in one piece, and the resultant formation is used as an electrode material. The way of producing such an electrode material will be described later.

The electrically conductive filter comprises carbon fibers, nickel-plated carbon fibers, carbon particles, nickel-plated carbon particles, nickel-plated organic fibers, nickel-plated inorganic fibers made of silica, alumina and the like, nickel-plated foil made of inorganic substance such as mica, nickel in fiber form, nickel particles, nickel foil and the like.

As the resin that is added when shaping an active material into particle or plate form, thermoplastic resins such as polyethylene, polypropylene, ethylene-vinyl acetate copolymer and the like may :be used. In this case, it may be arranged such that as thermoplastic resin is melted by application of heat and is mixed with an active material to uniformly disperse the active material. Alternatively, it may be arranged such that a resin dissolved by a solvent is added. For example, polyethylene, polypropylene, and ethylene-vinyl acetate copolymer are all soluble in solvents such as heated benzene, heated toluene, heated xylene and the like.

A resin dissolved in such a solvent is mixed with an active material, and with an electrically conductive filter if necessary. Thereafter, the solvent is removed by evaporation, thereby making it possible to produce an active material forming product cured by the resin.

Additionally, as a reaction-curing resin, epoxy resin, urethane resin, unsaturated polyester resin or the like may be used, and a thermosetting resin, e:g., phenol resin, may be used as a binder.

Furthermore, in the case where a resin dissolved in a water-soluble solvent is added when shaping an active material into particle, plate, or the like form, an active material forming product cured by the resin is prepared by extraction and removal of the solvent by the use of water. For example, polyether sulfone (PES) resin is soluble in dimethyl sulfoxide (DMSO). Additionally, polystyrene is soluble in acetone Polysulfone is soluble in dimethylformamide (DMF) and DMSO. Polyacrylonitrile is soluble in DMF, DMSO, and ethylene carbonate. Polyvinylidene fluoride is soluble in DMF, DMSO, and N-methyl-2-pyrrolidone (NMP). Polyamide is soluble in DMF and NMP. Polyimide is soluble in DMF and NMP.

Furthermore, in the case where a resin dissolved in an alcohol-soluble solvent is added when shaping an active material into particle, plate, or the like form, an active material forming product cured by the resin is prepared by extraction and removal of the solvent by the use of alcohol. For example, acetyl cellulose is soluble in methylene chloride. Oxide phenylene ether (PPO) is soluble in methylene chloride.

Additionally, the surface of an active material shaped into particle, plate, or the like form may be coated with electrical conductive materials such as carbon fibers, nickel-plated carbon fibers, nickel-plated organic fibers, nickel-plated inorganic fibers made of silica, alumina and the like, nickel-plated foil made of inorganic substance such as mica, carbon powder, nickel-plated carbon powder, nickel in fiber form, nickel powders, nickel foil and the like. Such coating is carried out as follows. Before the active material formed substance is cured, a coating material such as any one of the above-described metal powders, metal fibers, metal-plated fibers and the like is added. By rolling, stirring or the like, the coating material is adhered to the outer surface of the forming product in a soft state. For the case of a forming product cured by resin, for the case of a forming product employing a thermosoftening resin, or for the case of a forming product employing a solvent-soluble resin, each of the forming products is placed in the uncured state by increasing the temperature of the forming product for softening by application of heat or by swelling and softening by addition of a solvent, and an impregnated metal is added to the forming product for impregnation. Additionally, a surface of the active material in particle, plate, or the like form may be plated with nickel.

A method of producing an electrode material of the three-dimensional battery will be described. When producing an electrode of a three-dimensional battery, an active material of the above-described composition is combined with any one or at least two of a separator, a dividing wall, and a current collector (including an ion permeable current collector) so that they are formed integrally with one another in one piece.

Such formation is carried out as follows. A mixture of a powdered active material with an electrically conducive filler and a resin is stirred. The mixture is integrally combined with a separator, a dividing wall and/or a current collector. Then, pressurized forming is carried out while applying heat. In this case, the formation can be achieved by the use of a resin mixed with an electrically conductive filler without application of pressure. As the resin, thermoplastic resins such as polyethylene, polypropylene, ethylene-vinyl acetate copolymer and the like may be used.

Additionally, a thermoplastic resin dissolved in a solvent such as heated toluene, heated xylene and the like is mixed with a powdered active material and an electrically conductive filler to uniformly disperse the active material and the filler. Then, the mixture is stirred and granulated to form granulated particles. These granulated particles are integrally combined with a separator, a dividing wall and/or a current collector. Then, pressurizede forming is carried out while applying heat. At this time, it is possible to cure the resin by evaporating the solvent contained in the forming product. Also in this case, the formation can be achieved by the use of a resin mixed with an electrically conductive filler without application of pressure.

Furthermore, in the case where an active material shaped into particle, plate, or the like form is integrally formed in one piece with a separator, a dividing wall and/or a current collector, such formation can be carried out by re-dissolving the resin contained in the forming product without addition of a new resin.

Additionally, it is possible to provide integral formation in one piece by the use of a reaction-curing resin (such as epoxy resin, urethane resin, unsaturated polyester resin and the like) or a thermosetting resin such as phenol resin.

The aforesaid integral formation in one piece may be achieved by using, as a resin dissolved in a water-soluble solvent, a PES resin dissolved in DMSO, polystyrene dissolved in acetone, polysulfone dissolved in DMF or DMSO, polyacrylonitrile dissolved in DMF, DMSO, or ethylene carbonate, polyvinylidene fluoride dissolved in DMF, DMSO, or NMP, polyamide dissolved in DMF or NMP, or polyimide dissolved in DMF or NMP, in this case the solvent is extracted and removed from the forming product by the use of water. Additionally, the integral formation in one piece may be achieved by using, as a resin dissolved in an alcohol-soluble solvent, acetyl cellulose dissolved in methylene chloride, oxide phenylene ether (PPO) dissolved in methylene chloride or the like, in this case the solvent is extracted and removed from the forming product by the use of alcohol.

In the structure of an electrode produced in accordance with the method, an active material is combined with at least two of a separator, a dividing wall, and a current collector, thereby reducing the number of component parts required at the time of three-dimensional battery assembly, the time required for assembly, and the costs of assembly.

Hereinafter, examples will be described.

### EXAMPLE 1

150 g of particulate graphite (acetylene black) was put into a Henschel mixer having an internal volume of 10 litters. The graphite particles were stirred at 1000 rpm for about three minutes to obtain thorough dispersion thereof. Then, 1000 g of nickel hydroxide powders and 100 g of carbon fibers (trade name: DONA CARBO S-247) were added into the content of the mixer. Then, the mixer was operated for performing mixing operation at 1000 rpm for about three minutes. This was followed by addition of 150 g of ethylene-vinyl acetate copolymer into the mixer. Then, mixing and stirring was carried out at a temperature of not less than the softening temperature nor more than 130 °C for ten minutes. The resultant substance, i.e., a nickel hydroxide mixture, was poured onto a separator (a nylon nonwoven cloth) previously spread over the bottom of a mold frame having a cross section of 100 mm x 100 mm. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the separator was obtained.

### EXAMPLE 2

Nickel hydroxide powders, an electrically conductive filler, and a resin were mixed together with stirring in the same way as the first example, to prepare a nickel hydroxide mixture. A separator (a nylon nonwoven cloth) was previously spread over the bottom of a mold frame having a cross section of 100 mm x 100 mm. Then, the nickel hydroxide mixture was poured, from above, onto the separator. The mixture was cooled as it was in the molding frame without application of pressure, thereby causing the resin to cure. A forming product thus formed was removed from the mold frame. In this way, an electrode material comprising an integral formation in one piece of the active material with the separator was obtained.

### EXAMPLE 3

Nickel hydroxide powders, an electrically conductive filler, and a resin were mixed together with stirring in the same way as the first example to prepare a nickel hydroxide mixture. A current collector (a nickel plate) was previously spread over the bottom of a mold frame having a cross section of 100 mm x 100 mm. Then, the nickel hydroxide mixture was poured, from above, onto the current collector. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the current collector was obtained.

### EXAMPLE 4

Nickel hydroxide powders, an electrically conductive filler, and a resin were mixed together with stirring in the same way as the first example to prepare a nickel hydroxide mixture. A current collector (a nickel plate) was previously spread over the bottom of a mold frame having a cross section of 100 mm x 100 nm. The nickel hydroxide mixture was poured, from above, onto the current collector. The mixture was cooled as it was in the molding frame without application of pressure, thereby causing the resin to cure. A forming product thus formed was removed from the mold frame. In this way, an electrode material comprising an integral formation in one piece of the active material with the current collector was obtained.

### EXAMPLE 5

Nickel hydroxide powders, an electrically conductive filler, and a resin were mixed together with stirring in the same way as the first example to prepare a nickel hydroxide mixture. A separator (a nylon nonwoven cloth) was previously spread over the bottom of a mold frame having a cross section of 100 mm x 100 mm. Then, the nickel hydroxide mixture was poured, from above, onto the separator. Additionally, a current collector (a nickel plate) was placed on the filled nickel hydroxide mixture. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the separator and the current collector was obtained.

### EXAMPLE 6

Nickel hydroxide powders, an electrically conductive filler, and a resin were mixed together with stirring in the same way as the first example to prepare a nickel hydroxide mixture. A separator (a nylon nonwoven cloth) was previously spread over the bottom of a mold frame having a cross section of 100 mm x 100 mm. And, the nickel hydroxide mixture was poured, from above, onto the separator. Additionally, a current collector (a nickel plate) was placed on the filled nickel hydroxide mixture. The mixture was cooled as it was in the molding frame without application of pressure, thereby causing the resin to cure. A forming product thus formed was removed from the mold frame. In this way, an electrode material comprising an integral formation in one piece of the active material with the separator and current collector was obtained.

### EXAMPLE 7

Nickel hydroxide powders, an electrically conductive filler, and a resin were mixed together with stirring in the same way as the first example, to prepare a nickel hydroxide mixture. A separator (a nylon nonwoven cloth) was previously spread over the bottom of a mold frame having a cross section of 100 mm x 100 mm. And, an ion permeable current collector (a foamed nickel sheet) was placed on the separator. Then, the nickel hydroxide mixture was poured from above. This was followed by placement of a current collector (a nickel plate) on the filled nickel hydroxide mixture. At this time, it was arranged such that the ion permeable current collector came into contact with the current collector. While applying heat from above, a pressure of 0.1 MPa was applied for achieving pressurized forming, and in such a state the temperature was reduced to cause the resin to curen. A forming product thus formed was removed from the mold frame. In this way, an electrode material comprising an integral formation in one piece of the active material with the separator, ion permeable current collector and current collector was obtained.

### EXAMPLE 8

Nickel hydroxide powders, an electrically conductive filler, and a resin were mixed together with stirring in the same way as the first example, to prepare a nickel hydroxide mixture. A separator (a nylon nonwoven cloth) was previously spread over the bottom of a mold frame having a cross section of 100 mm x 100 mm. And, an ion permeable current collector (a foamed nickel sheet) was placed on the separator. Then, the nickel hydroxide mixture was poured from above. This was followed by placement of a current collector (a nickel plate) on the filled nickel hydroxide mixture. At this time, it was arranged such that the ion permeable current collector came into contact with the current collector. The mixture was cooled as it was in the molding frame without application of pressure, thereby causing the resin to cure. A forming product thus formed was removed from the mold frame. In this way, an electrode material comprising an integral formation in one piece of the active material with the separator, ion permeable current collector and current collector was obtained.

### EXAMPLE 9

150 g of particulate graphite (acetylene black) was put into a Henschel mixer having an internal volume of 10 litters. The graphite particles were stirred at 1000 rpm for about three minutes to obtain thorough dispersion thereof. Then, 1000 g of nickel hydroxide powders and 100 g of carbon fibers (trade name: DONACARBO S-247) were added to the content of the mixer. Then, the mixer was operated for performing mixing operation at 1000 rpm for about three minutes. Separately, 150 g of ethylerte-vinyl acetate copolymer was added to 1000 g of xylene heated to a temperature of 60 °C for dissolution therein. The resin dissolved in the heated xylene was added to a mixture of the nickel hydroxide powders and electrically conductive filler, heated to a temperature of 60 °C. While maintaining temperature at 60 °C by application of heat, the content of the Henschel mixer was stirred. Then, the Henschel mixer was cooled while still continuing stirring, and the mixed and kneaded substance was cooled and ground into powders. The powders were put into a high speed mixer and were entirely stirred by an agitator while at the same time controlling the size of granulated particles by means of a chopper. The interval volume of the high speed mixer used was 2 litters. The speed of rotation of the agitator used was 600 rpm. The speed of rotation of the chopper used was 1500 rpm. Under these conditions, the temperature of the powders was increased from room temperature up to 50 °C with stirring. After generation of granulated particles, stirring was stopped while still continuing cooling. The particles contained therein xylene. Accordingly, the particles were placed in a reduced pressure dryer and heated to 50 °C for removal of the xylene therefrom. After being cooled, the particles were sieved with a sieve having a mesh size of 2.88 mm and with a sieve having a mesh size of 1 mm. As a result, granulated particles ranging in size between 1 mm and 2.88 mm were obtained.

A current collector (a nickel plate) was previously spread over the bottom of a mold frame having a cross section of 100 mm x 100 mm. Then, the granulated particles were poured, from above, onto the current collector. While applying heat from above, a pressure of 0.1 MPa was applied for achieving pressurized forming, and in such a state the temperature was reduced to cause the resin to cure. A froming product thus formed was removed from the mold frame. In this way, an electrode material comprising an integral formation in one piece of the active material with the current collector was obtained.

### EXAMPLE 10

Nickel hydroxide powders, an electrically conductive filler, and a resin were mixed together with stirring for granulation in the same way as the ninth example. A current collector (a nickel plate) was previously spread over the bottom of a mold frame having a cross section of 100 mm x 100 mm. Then, the granulated particles was poured, from above, onto the current collector. The granulated particles were cooled in the molding frame without application of pressure, thereby causing the resin to harden. A forming product thus formed was removed from the mold frame. In this way, an electrode material comprising an integral formation in one piece of the active material with the current collector was obtained.

### EXAMPLE 11

150 g of particulate graphite (acetylene black) was put into a Henschel mixer having an internal volume of 10 litters. The graphite particles were stirred at 1000 rpm for about three minutes to obtain thorough dispersion thereof. Then, 2500 g of hydrogen-occluding alloy powders and 100 g of carbon fibers (trade name: DONACARBO S-247) were added to the content of the mixer. Then, the mixer was operated for performing mixing operation at 1000 rpm for about three minutes. Separately, 150 g of ethylene-vinyl acetate copolymer was added to 1000 g of xylene heated to a temperature of 60 °C for dissolution therein. The resin dissolved in the heated xylene was added to a mixture of the hydrogen-occluding alloy powders and electrically conductive filler, heated to a temperature of 60 °C. While maintaining temperature at 60 °C by application of heat, the content of the Henschel mixer was stirred. Then, the Henschel mixer was cooled while still continuing stirring, and the mixed and kneaded substance was cooled and ground into powders. The powders were put in a high speed mixer and were entirely stirred by an agitator while at the same time controlling the size of granulated particles by means of a chopper. The internal volume of the high speed mixer used was 2 litters. The speed of rotation of the agitator used was 600 rpm. The speed of rotation of the chopper used was 1500 rpm. Under these conditions, the temperature of the powders was increased from room temperature to 50 °C with stirring. After generation of granulated particles, stirring was stopped while still continuing cooling. The particles contained therein xylene. Accordingly, the particles were placed in a reduced pressure dryer and heated to 50 °C for removal of the xylene therefrom. After being cooled, the particles were sieved with a sieve having a mesh size of 2.88 mm and with a sieve having a mesh size of 1 mm. As a result, granulated particles ranging in size between 1 mm and 2.88 mm were obtained.

A current collector (a nickel plate) was previously spread over the bottom of a mold frame having a cross section of 100 mm x 100 mm. Then, the granulated particles were poured, from above, onto the current collector. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the current collector was obtained.

### EXAMPLE 12

150 g of particulate graphite (acetylene black) was put into a Henschel mixer having an internal volume of 10 litters. The graphite particles were stirred at 1000 rpm for about three minutes to obtain thorough dispersion thereof. Then, 2500 g of sand (Toyoura standard sand) and 100 g of carbon fibers (trade name: DONACARBO S-247) were added to the content of the mixer. Then, the mixer was operated for performing mixing operation at 1000 rpm for about three minutes. Separately, 150 g of ethylene-vinyl acetate copolymer was added to 1000 g of xylene heated to a temperature of 60 °C for dissolution therein. The resin dissolved in the heated xylene was added to a mixture of the sand and electrically conductive filler, heated to a temperature of 60 °C. While maintaining temperature at 60 degrees Centigrade by application of heat, the content of the Henschel mixer was stirred. Then, the Henschel mixer was cooled while still continuing stirring, and the mixed/kneaded substance was cooled and ground to powders. The powders were put into a high speed mixer and were entirely stirred by an agitator while at the same time controlling the size of granulated particles by means of a chopper. The internal volume of the high speed mixer used was 2 litters. The speed of rotation of the agitator used was 600 rpm. The speed of rotation of the chopper used was 1500 rpm. Under these conditions, the temperature of the powders was increased from room temperature to 50 °C with stirring. After generation of granulated particles, stirring was stopped while still continuing cooling. The particles contained therein xylene. Accordingly, the particles were placed in a reduced pressure dryer and heated to 50 °C for removal of the xylene therefrom. After being cooled, the particles were sieved with a sieve having a mesh size of 2.88 mm and with a sieve having a mesh size of 1 mm. As a result, granulated particles ranging in size between 1 mm and 2.88 mm were obtained.

A current collector (a nickel plate) was previously spread over the bottom of a mold frame having a cross section of 100 mm x 100 mm. Then, the granulated particles were poured, from above, onto the current collector. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the current collector was obtained.

### EXAMPLE 13

150 g of particulate graphite (acetylene black) was put into a Henschel mixer having an internal volume of 10 litters. The graphite particles were stirred at 1000 rpm for about three minutes to obtain thorough dispersion thereof. Then, 1000 g of particulate coal (powdered coal of Daido coal) and 100 g of carbon fibers (trade name: DONACARBO S-247) were added to the content of the mixer. Then, the mixer was operated for performing mixing operation at 1000 rpm for about three minutes. Separately, 150 g of ethylene-vinyl acetate copolymer was added to 1000 g of xylene heated to a temperature of 60 °C for dissolution therein. The resin dissolved in the heated xylene was added to a mixture of the coal and electrically conductive filler, heated to a temperature of 60 °C. While maintaining temperature at 60 degrees Centigrade by application of heat, the content of the Henschel mixer was stirred. Then, the Henschel mixer was cooled while still continuing stirring, and the mixed and kneaded substance was cooled and ground to powders. The powders were put in a high speed mixer and were entirely stirred by an agitator while at the same time controlling the size of granulated particles by means of a chopper. The internal volume of the high speed mixer used was 2 litters. The speed of rotation of the agitator used was 600 rpm. The speed of rotation of the chopper used was 1500 rpm. Under these conditions, the temperature of the powders was increased from room temperature to 50 °C with stirring. After generation of granulated particles, stirring was stopped while still continuing cooling. The particles contained therein xylene. Accordingly, the particles were placed in a reduced pressure dryer and heated to a temperature of 50 °C for removal of the xylene therefrom. After being cooled, the particles were sieved with a sieve having a mesh size of 2.88 mm and with a sieve having a mesh size of 1 mm. As a result, granulated particles ranging in size between 1 mm and 2.88 mm were obtained.

A current collector (a nickel plate) was previously spread over the bottom of a mold frame having a cross section of 100 mm x 100 mm. Then, the granulated particles were poured, from above, onto the current collector. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the current collector was obtained.

### EXAMPLE 14

150 g of particulate graphite (acetylene black) was put into a Henschel mixer having an internal volume of 10 litters. The graphite particles were stirred at 1000 rpm for about three minutes to obtain thorough dispersion thereof. Then, 500 g of charcoal (prepared by calcining wood at 600 °C for two hours) and 100 g of carbon fibers (trade name: DONACARBO S-247) were added to the content of the mixer. Then, the mixer was operated for performing mixing operation at 1000 rpm for about three minutes. Separately, 150 g of ethylene-vinyl acetate copolymer was added to 1000 g of xylene heated to a temperature of 60 °C for dissolution therein. The resin dissolved in the heated xylene was added to a mixture of the charcoal and electrically conductive filler, heated to a temperature of 60 °C. While maintaining temperature at 60 °C by application of heat, the content of the Henschel mixer was stirred. Then, the Henschel mixer was cooled while still continuing stirring, and the mixed and kneaded substance was cooled and ground to powders. The powders were put in a high speed mixer and were entirely stirred by an agitator while at the same time controlling the size of granulated particles by means of a chopper. The internal volume of the high speed mixer used was 2 liters. The speed of rotation of the agitator used was 600 rpm. The speed of rotation of the chopper used was 1500 rpm. Under these conditions, the temperature of the powders was increased from room temperature to 50 °C with Stirring. After generation of granulated particles, stirring was stopped while still continuing cooling. The particles contained therein xylene. Accordingly, the particles were placed in a reduced pressure dryer and heated to 50 °C for removal of the xylene therefrom. After being cooled, the particles were sieved with a sieve having a mesh size of 2.88 mm and with a sieve having a mesh size of 1 mm. As a result, granulated particles ranging in size between 1 mm and 2.88 mm were obtained.

A current collector (a nickel plate) was previously spread over the bottom of a mold frame having a cross section of 100 mm x 100 mm. Then, the granulated particles were poured, from above, onto the current collector. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the current collector was obtained.

### EXAMPLE 15

150 g of particulate graphite (acetylene black) was put into a Henschel mixer having an internal volume of 10 litters. The graphite particles were stirred at 1000 rpm for about three minutes to obtain thorough dispersion thereof. Then, 500 g of silica (obtained by calcining chaff at 600 °C for two hours) and 100 g of carbon fibers (trade name: DONACARBO S-247) were added to the content of the mixer. Then, the mixer was operated for performing mixing operation at 1000 rpm for about three minutes. Separately, 150 g of ethylene-vinyl acetate copolymer was added to 1000 g of xylene heated to a temperature of 60 °C for dissolution therein. The resin dissolved in the heated xylene was added to a mixture of the silica and electrically conductive filler, heated to a temperature of 60 °C. While maintaining temperature at 60 °C by application of heat, the content of the Henschel mixer was stirred. Then, the Henschel mixer was cooled while still continuing stirring, and the mixed and kneaded substance was cooled and ground to powders. The powders were put in a high speed mixer and were entirely stirred by an agitator while at the same time controlling the size of granulated particles by means of a chopper. The internal volume of the high speed mixer used was 2 litters. The speed of rotation of the agitator used was 600 rpm. The speed of rotation of the chopper used was 1500 rpm. Under these conditions, the temperature of the powders was increased from room temperature up to 50 °C with stirring. After generation of granulated particles, stirring was stopped while still continuing cooling. The particles contained therein xylene. Accordingly, the particles were placed in a reduced pressure dryer and were heated up to 60 °C for removal of the xylene therefrom. After being cooled, the particles were sieved with a sieve having a mesh size of 2.88 mm and with a sieve having a mesh size of 1 mm. As a result, granulated particles ranging in size between 1 mm and 2.88 mm were obtained.

A current collector (a nickel plate) was previously spread over the bottom of a mold frame having a cross section of 100 mm x 100 mm. Then, the granulated particles were poured, from above, onto the current collector. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the current collector was obtained.

### EXAMPLE 16

150 g of particulate graphite (acetylene black) was put into a Henschel mixer having an internal volume of 10 litters. These graphite particles were stirred at 1000 rpm for about three minutes to obtain thorough dispersion thereof. Then, 1000 g of slag (prepared by melting refuse incinerator ash at 1500 °C and then by cooling it) and 100 g of carbon fibers (trade name: DONACARBO S-247) were added to the content of the mixer. Then, the mixer was operated for performing mixing operation at 1000 rpm for about three minutes. Separately, 150 g of ethylene-vinyl acetate copolymer was added to 1000 g of xylene heated to a temperature of 60 °C for dissolution therein. The resin dissolved In the heated xylene was added to a mixture of the slag and electrically conductive filler, heated to a temperature of 60 °C. While maintaining temperature at 60 °C by application of heat, the content of the Henschel mixer was stirred. Then, the Henschel mixer was cooled while still continuing stirring, and the mixed and kneaded substance was cooled and ground to powders. The powders were put in a high speed mixer and were entirely stirred by an agitator while at the same time controlling the size of granulated particles by means of a chopper. The internal volume of the high speed mixer used was 2 litters. The speed of rotation of the agitator used was 600 rpm. The speed of rotation of the chopper used was 1500 rpm. Under these conditions, the temperature of the powders was increased from room temperature to 50 °C with stirring. After generation of granulated particles, stirring was stopped while still continuing cooling. The particles contained therein xylene. Accordingly, the particles were placed in a reduced pressure dryer and were heated to 50 °C for removal of the xylene therefrom. After being cooled, the particles were sieved with a sieve having a mesh size of 2.88 mm and with a sieve having a mesh size of 1 mm. As a result, granulated particles ranging in size between 1 mm and 2.88 mm were obtained.

A current collector (a nickel plate) was previously spread over the bottom of a mold frame having a cross section of 100 mm x 100 mm. Then, the granulated particles were poured, from above, onto the current collector. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an Integral formation In one piece of the active material with the current collector was obtained.

### EXAMPLE 17

150 g of particulate graphite ((acetylene black), was put into a Henschel mixer having an internal volume of 10 litters. The graphite particles were stirred at 1000 rpm for about three minutes to obtain thorough dispersion thereof. Then, 500 g of carbon (prepared by calcining carbon fibers at 1100 °C) was added to the content of the mixer. Then, the mixer was operated for performing mixing operation at 1000 rpm for about three minutes. Separately, 150 g of ethylene-vinyl acetate copolymer was added to 1000 g of xylene heated to a temperature of 60 °C for dissolution therein. The resin dissolved in the heated xylene was added to a mixture of the carbon and electrically conductive filler, heated to a temperature of 60 °C. While maintaining temperature at 60 °C by application of heat, the content of the Henschel mixer was stirred Then, the Henschel mixer was cooled while still continuing storring, and the mixed and kneaded substance was cooled and ground to powders. The powders were put in a high speed mixer and were entirety stirred by an agitator While at the same time controlling the size of granulated particles by means of a chopper. The internal volume of the high speed mixer used was 2 litters. The speed of rotation of the agitator used was 600 rpm. The speed of rotation of the chopper used was 1500 rpm. Under these conditions, the temperature of the powders was increased from room temperature up to 50 °C with stirring. After generation of granulated particles, stirring was stopped while still continuing cooling. The particles contained therein xylene. Accordingly, the particles were placed in a reduced pressure dryer and were heated to 50 °C for removal of the xylene therefrom. After being cooled, the particles were sieved with a sieve having a mesh size of 2.88 mm and with a sieve having a mesh size of 1 mm. As a result, granulated particles ranging in size between 1 mm and 2.88 mm were obtained.

A current collector (a nickel plate) was previously spread over the bottom of a mold frame having a cross section of 100 mm x 100 mm. Then, the granulated particles were poured, from above, onto the current collector. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the current collector was obtained.

### EXAMPLE 18

Nickel hydroxide powders, an electrically conductive filler, and a resin were mixed together with stirring in the same way as the first example, to prepare a nickel hydroxide mixture. A current collector provided with projected portions as shown in Figures 3 and 4 (a nickel current collector designed for a battery cell internal size of 100 mm x 100 mm x 10 mm: a current collector provided with 8 mm-long projected portions at pitches of 10 mm) was prepared. The current collector provided with such projected portions was previously spread over the bottom of a mold frame having a cross section of 100 mm by 100 mm. Then, the nickel hydroxide mixture was poured, from above, onto the current collector. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the current collector was obtained.

### EXAMPLE 19

Nickel hydroxide powders, an electrically conductive filler, and a resin were mixed together with stirring in the same way as the first example, to prepare a nickel hydroxide mixture. A current collector having a cooling structure as shown in Figure 5 (a nickel current collector designed for a battery cell internal size of 100 mm x 100 mm x 10 mm: a current collector in which is disposed a heat transfer pipe through which a refrigerant such as water flows) was prepared. The current collector provided with such a cooling structure was previously spread over the bottom of a mold frame having a cross section of 100 mm x 100 mm. Then, the nickel hydroxide mixture was poured, from above, onto the current collector. While applying heat from above, a pressure of 0.1 MPa was applied for achieving pressurized forming, and in such a state the temperature was reduced to cause the resin to cure. A forming product thus formed was removed from the mold frame. In this way, an electrode material comprising an integral formation in one piece of the active material with the current collector was obtained.

### 2) EMBODIMENTS AND EXAMPLES FOR SOLVING THE SECOND PROBLEM

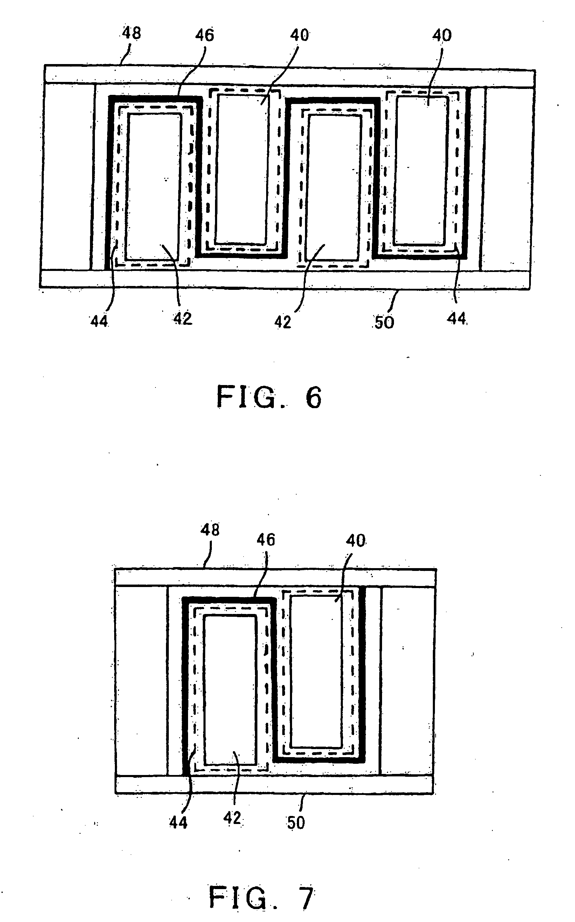

Referring to Figure 6, is shown an example of a high power type three-dimensional battery. The present example is a battery that is constructed of a single basic unit alone. A resin and an electrically conductive filler are added to an active material substance which causes a cell reaction, and the mixture is formed and cured to prepare an active material forming product in particle, plate, block, rod, or the like form. In this case, an active material substance in the form of powders may be used as it is. Alternatively, a secondarily formed active material in the form of particles may be used. Additionally, a powdered or particulate active material like paste by the use of PVA or the like may be used. Active material substances of all kinds may be used to form an active material capable of causing a cell reaction, regardless of the type of battery and regardless of cathode or anode. For the case of nickel-hydrogen secondary batteries, for example, 2000 g of nickel hydroxide powders, 200 g of EVA resin, and 300 g of electrically conductive filler (carbon black and carbon fibers) are mixed together and, thereafter, the mixture is subjected to pressurized forming by application of a pressure of 0.1 MPa to form a plate-like cathode active material 40 (100 mm x 30 mm x 3 mm (thickness)). Likewise, for the case of nickel-hydrogen secondary batteries, for example, 6000 g of hydrogen-occluding alloy powders, 200 g of EVA resin, and 300 g of electrically conductive filler (carbon black and carbon fibers) are mixed together and, thereafter, the mixture is subjected to pressurized forming by application of a pressure of 0.1 MPa to form a plate-like anode active material 42 (100 mm x 30 mm x 2 mm (thickness)).

The cathode and anode active materials 40, 42 are each coated with an ion permeable current collector 44. For example, for the case of each plate-like active material, any surface(s) (from one to six surfaces) thereof may be coated with the ion permeable current collector 44. Additionally, in the active material forming step described above, the active material may be coated with an ion permeable current collector for integral formation. Furthermore, when using an active material in powder or paste form, it is advisable that the active material is filled in an ion permeable current collector in the form of a sack. In the present example, for example, four of the surfaces of each of the plate-like cathode and anode active materials 40, 42 are ceated with the ion permeable current collector 44 (a formed nickel sheet). As the material of the ion permeable current collector that has voids therein permits passage of ions herethrough, and is electrically conductive a nickel metal mesh, a nickel-plated punching metal, a metal such as expanded metal, a nickel-plated foamed resin such as urethane, nickel-plated porous material such as polyethylene, polypropylene, nylon, cotton, carbon fibers and the like, nickel-plated inorganic fibers made of silica, alumina and the like, nickel-plated organic fibers, nickel-plated felt, or nickel-plated foll made of inorganic substance such as mica, may be used in addition to the foamed nickel metal.

A bellows-shaped separator 46 consisting of a material which undergoes no degeneration such as corrosion in an alkali electrolyte solution and which is capable of both providing electrical insulation and permitting passage of ions therethrough, is disposed. Cathode active materials 40 and anode active materials 42, when loaded in the battery cell, are placed alternately on the contact side with a cathode current collector 48 and on the contact side with an anode current collector 50, respectively, facing each other across the separator 46. A basic unit thus prepared is loaded, together with an electrolyte (KOH, NaOH, LiOH and the like) solution between the cathode current collector 48 and the anode current collector 50 in the battery cell to complete a battery. As the material of the separator 46, a textile or nonwoven cloth made of any one of polytetrafluoroethylene, polythylene, polypropylene, nylon and the like, or membrane filter may be used. As the material of each of the cathode current collector 48 and the anode current collector 50, a nickel metal plate, a nikel metal foil, carbon, nickel-plated from, nickel-plated stainless steel, nickel-plated carbon and the like may be used.

The structure of the bellows-shaped unit; which is a basic unit is not limited to the one made up of a pair of cathode active materials and a pair of anode active materials, as shown in Fig. 6. The bellows-like unit may be produced by adequately selecting a structure. For example, the bellows-shaped unit may be formed using a minimum structure as shown in Figure 7 or a structure made up of any number of pairs of cathode and anode active materials.

The details of the charging and discharging of the battery of the present invention will be described below.

### CHARGING

A voltage is applied to the battery for the supply o.f electrons from a power generating means (not shown) to the anode current collector 50. The electrons move from the anode current collector 50 to the anode active material 42 and react.

Ions generated by the reaction pass through the separator 46, react with the cathode active material 40, and discharges electrons. These electrons move to the cathode current collector 48, and are delivered to the power generating means.

### DISCHARGING

Electrons are supplied from a load to the cathode current collector 48. The electrons move from the cathode current collector 48 to the cathode active material 40 and react. Ions generated by the reaction pass through the separator 46, react with the anode active material 42, and discharge electrons. These electrons move to the anode current collector 50, and are delivered to the load.

In the battery in which the cathode active material 40 and the anode active material 42 are disposed facing each other across the bellows-shaped separator 46, the distance between the cathode active material 40 and the anode active material 42 is short, and the distance for which electrons move becomes short, thereby achieving high output powers. In addition, the length for which ions diffuse becomes short, thereby achieving excellent diffusion of ions. Besides, when gas is generated from the active material because of overcharge or the like, the gas flows to its opposite electrode and is likely to be consumed easily, and sealing is established easily.

In addition, if the cathode active material 40 and the anode active material 44, both of which are covered with the ion permeable current collector 44 made of porous nickel, are used, this shortens the distance between the active material and the current collector, thereby making the moving distance of electrons shorter, and the current collecting area is increased. As a result, high performance batteries of small electrical resistance are obtained.

Furthermore, since the separator 46 and the ion permeable current collector 44 exist relatively plentifully in the inside of the battery cell, the filling amount of the cathode and anode active materials 40, 42 per unit Volume is small, thereby making it possible to hold a plenty of electrolytic solution within the cell. Accordingly, the dry out phenomenon, in which a solid-liquid reaction (a cell reaction) will no longer occur due to electrolytic solution depletion, is unlikely to occur.

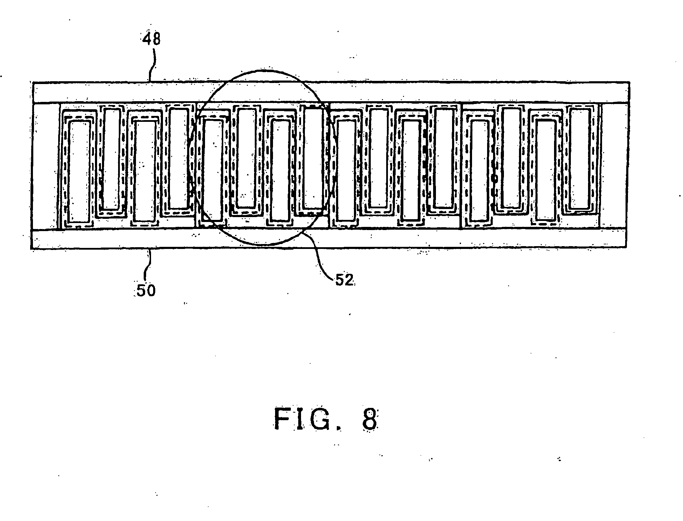

Referring now to Figure 8, is shown an example of a second example of the high power type three-dimensional battery. In the present example, a plurality of basic units (for example, four basic units in Fig. 8) are incorporated in parallel to constitute a battery. As a basic unit 52, a bellows-shaped basic unit as described in the first example is produced. Four basic units 52 are loaded in parallel between the cathode current collector 48 and the anode current collector 50 for constitution of a battery.

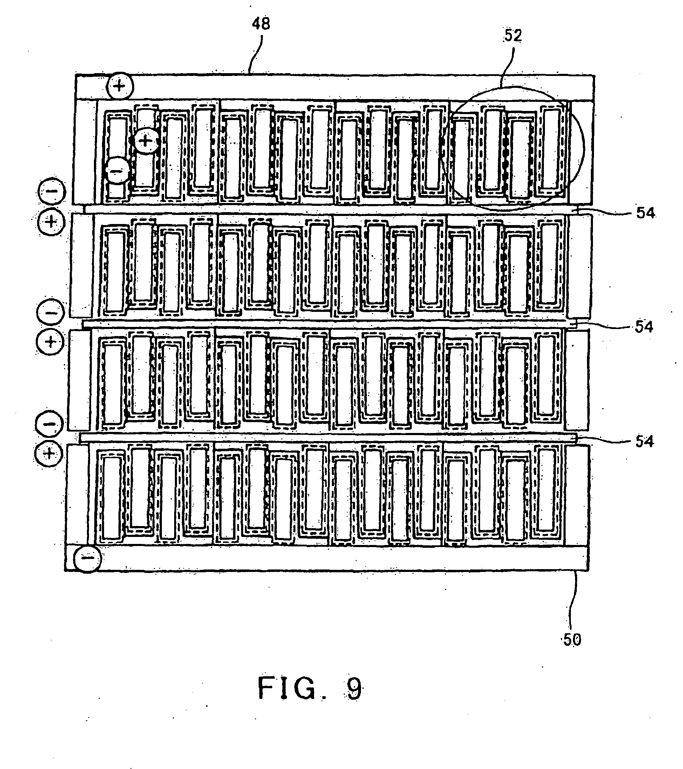

Referring to Figure 9, is shown an example of a third example of the high power type three-dimensional battery. In the present example, a plurality of basic units (for example, four basic units in Fig. 9) are incorporated in parallel in the form of layers. A plurality of such layers (for example, four layers in Fig. 9) are placed one upon the other to constitute a battery. As the basic unit 52, a bellows-shaped basic unit as described in the first example is produced. Four basic units 52 are loaded in parallel into a battery cell in the form of layers. Four such layers are placed one upon the other through respective dividing walls 54 to constitute a battery. If cells are placed in series one upon the other, this provides a high voltage battery. As the material of the dividing wall 54, a nickel metal plate, a nickel metal foil, carbon, nickel-plated iron, nickel-plated stainless steel, nickel-plated carbon, or the like may be used.

As in the second and third examples, the arrangement that a plurality of bellows-shaped basic units are loaded in a battery cell makes it possible to easily achieve an increase in battery size and, in addition, since there are no welds causing the electrical resistance to increase, this prevents the drop in performance due to the increase in size. Additionally, it becomes possible to reduce production cost and production time.

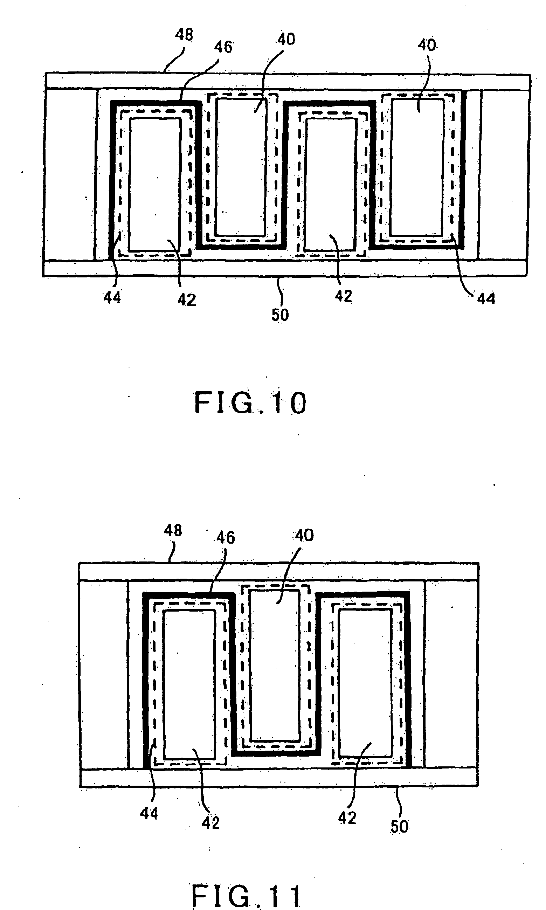

Referring to Figure 10, is shown an example of a fourth example of the high power type three-dimensional battery. In the present example, a battery is constituted of a single basic unit and, in comparison with the first example, the present embodiment employs a thicker active material in order to provide a battery with a great volume energy density. For example, for the case of nickel-hydrogen secondary batteries, 2000 g of nickel hydroxide powders, 200 g of EVA resin, and 300 g of electrically conductive filler (carbon black and carbon fibers) are mixed together. Thereafter, the mixture is subjected to pressurized forming by application of a pressure of 0.1 MPa to form a plate-like cathode active material 40 (100 mm x 30 mm x 12 mm (thickness)). Likewise, for example, 6000 g of hydrogen-occluding alloy powder, 200 g of EVA resin, and 300 g of electrically conductive filler (carbon black and carbon fibers) are mixed together. Thereafter, the mixture is subjected to pressurized forming by application of a pressure of 0.1 MPa to form a plate-like anode active material 42 (100 mm x 30 mm x 8 mm (thickness)). As in the first example, any surface(s) (for example, four surfaces) of each of the cathode and anode active materials 40, 42 are coated with the ion permeable current collector 44, after which bellows-shaped cathode active materials 40 and anode active materials 42 are incorporated so that they face each other across the separator 46. The basic unit thus prepared is loaded, together with an electrolytic solution, between the cathode current collector 48 and the anode current collector 50 in the battery cell for constitution of a battery.

If, as described above, the thickness of active material is increased, this relatively reduces the ratio of the separator 46 and the ion permeable current collector 44. As a result, despite the drop in output power per volume it becomes possible to obtain a battery having a high volume energy density. On the other hand, if the thickness of active material is reduced because high power battery performance is required in the aforesaid examples, this relatively increases the ratio of the separator 46 and the ion permeable type current collector 44. As a result, despite the drop in volume energy density it becomes possible to obtain a high power battery. As described above, any changes to the battery specification can be made just by increasing or decreasing the thickness of active material and the like, and desired battery specifications are obtained easily.

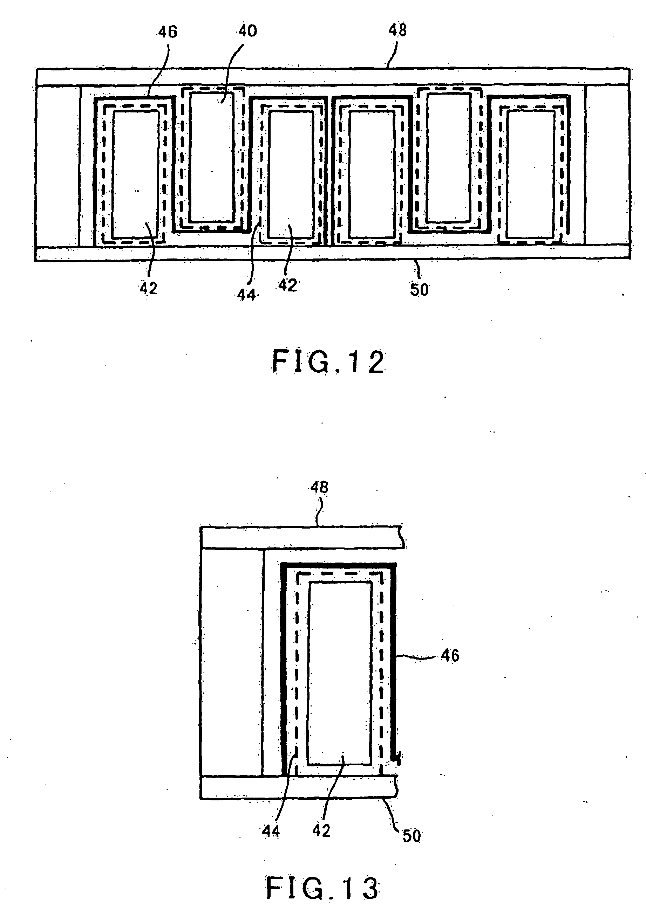

Referring to Figures 11 and 12, is shown an example of a fifth example of the high power type three-dimensional battery. In a bellows-shaped unit (a basic unit) of the present example comprising cathode and anode active materials which are so incorporated as to face each other across a separator, the number of cathode active materials is greater than the number of anode active materials by one, or vice versa, and either the cathode active materials or the anode active materials, whichever are greater in number, are disposed at each end of the basic unit.

Referring to Figure 11, is shown a basic unit by way of example In which anode active materials 42 are disposed on both sides of a cathode active material 40, with a bellow-shaped separator 46 sandwiched between the cathode active material 40 and each anode active material 42. Other structures and operations are the same as the first example. In addition, the bellows-shaped basic unit of the present example may be produced by adequately selecting a structure ranging from a minimum structure shown in Figure 11 to a structure provided with any arbitrary number of basic units.

When achieving an increase in size by loading bellows-shaped basic units (as shown in Fig. 11) in parallel, it is necessary to load them in the way as shown in Figure 12.

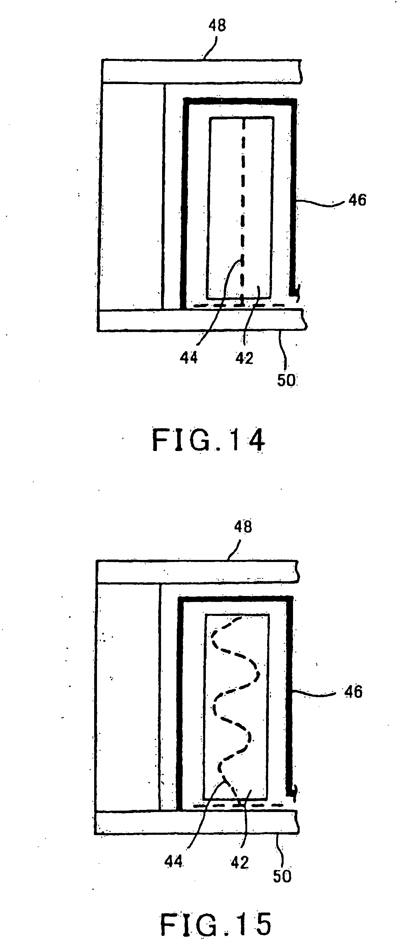

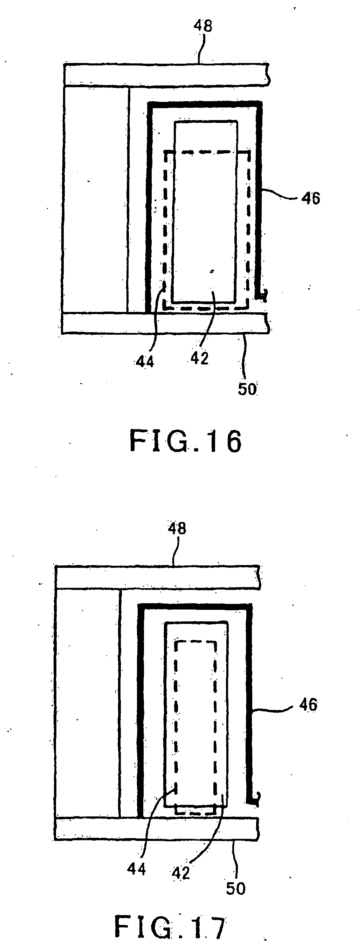

Referring to Figures 13 to 17, is shown examples of an embodiment of the high power type three-dimensional battery in accordance with the present invention. In the embodiment, an ion permeable current collector is disposed at a certain position in cathode active material and anode active material. Figure 13 shows an example in which three surfaces of a plate-like anode active material 42 are covered with an ion permeable current collector 44, indicating that any surface(s) of the cathode active material 40 and anode active material 42 can be coated with the ion permeable current collector 44. Figures 14-17 each show an example in which an ion permeable current collector 44 is disposed on a surface of the anode active material 42 and inside thereof, indicating that that the ion permeable current collectors 44 can be disposed at any place(s) of the cathode active material 40 and anode active material 42. Even in the case where an ion permeable current collector is disposed inside the cathode and anode active materials, the distance between the active material and the current collector is reduced and the moving distance of electrons is reduced. The current collector area increases and a high performance battery having a small electric resistance is obtained.

Other structures and operations are the same as the first to fifth examples

### INDUSTRIAL APPLICABILITY

The present invention, since it is constructed in the way as describe above, makes it possible to reduce the number of component parts required at the time of assembling a battery. Therefore, the present invention provides a three-dimensional battery and its electrode structure requiring less assembly time and less assembly cost. The present invention further provides a three-dimensional battery capable of being increased easily in size and of producing high output powers without undergoing a drop in performance due to the incerase in size.

## Claims

1. A power type three-dimensional battery wherein:
a bellows-shaped separator (46) is so located between a cathode current collector (48) and an anode current collector (50) which are disposed face to face with each other as to come close to the current collectors alternately,
either powder or a forming product of a cathode active material (40) is filled, together with an electrolytic solution, in a space defined by the bellows-shaped separator (46) and the cathode current collector (48),
either powder or a forming product of an anode active material (42) is filled, together with an electrolytic solution, in a space defined by the bellows-shaped separator (46) and the anode current collector (50), and
the cathode active materials (40) and the anode active materials (42) are filled alternately, facing each other across the separator (46),
**characterised in that** an ion permeable current collector (44) is disposed inside the cathode and anode active materials (40, 42).

2. The power type three-dimensional battery according to claim 1, wherein the ion permeable current collector (44) is disposed on a surface of the cathode and anode active materials (40, 42) and inside thereof.

3. The power type three-dimensional battery according to claim 1 or claim 2, wherein the ion permeable current collector (44) is made of a material which has voids therein, which permits passage of ions, and which has electrical conductive properties, and the ion permeable current collector material is at least any one selected from the group consisting of foamed nickel metal, a nickel metal mesh, nickel-plated punching metal, metal such as expanded metal and the like, nickel-plated foamed resin such as urethane and the like, nickel-plated porous material made of polyethylene, polypropylene, nylon, cotton, carbon fibres and the like, nickel-plated inorganic fibres made of silica, alumina and the like, nickel-plated organic fibres, nickel-plated felt, and nickel-plated foil made of an inorganic substance such as mica.

## Patentansprüche

1. Dreidimensionale Batterie des Stromtyps, wobei:
ein balgförmiger Separator (46) derart zwischen einem Kathodenstromkollektor (48) und einem Anodenetromkollektor (50), die einander gegenüberliegend angeordnet sind, angebracht ist, um den Stromkollektoren abwechselnd nahe zu kommen,
entweder Pulver oder ein ein kathodenaktives Material (40) bildendes Produkt gemeinsam mit einer Elektrolytlösung in einen Raum gefüllt ist, der durch den balgförmigen Separator (46) und den Kathodenstromkollektor (48) abgegrenzt ist,
entweder Pulver oder ein ein anodenaktives Material (42) bildendes Produkt gemeinsam mit einer Elektrolytlösung in einen Raum gefüllt ist, der durch den balgförmigen Separator (46) und den Anodenstromkollektor (50) abgegrenzt ist, und
die kathodenaktiven Materialien (40) und die anodenaktiven Materialien (42) abwechselnd und einander durch den Separator (46) gegenüberliegend gefüllt sind,
**dadurch gekennzeichnet, dass** ein ionendurchlässiger Stromkollektor (44) innerhalb der kathoden- und anodenaktiven Materialien (40, 42) angeordnet ist.

2. Dreidimensionale Batterie des Stromtyps nach Anspruch 1, wobei der ionendurchlässige Stromkollektor (44) auf einer Fläche der kathoden- und anodenaktiven Materialien (40, 42) und darin angeordnet ist.

3. Dreidimensionale Batterie des Stromtyps nach Anspruch 1 oder Anspruch 2, wobei der ionendurchlässige Stromkollektor (44) aus einem Material hergestellt ist, das Hohlräume darin aufweist, das den Durchgang von Ionen zulässt und das elektrisch leitende Eigenschaften aufweist, und das ionendurchlässige Stromkollektormaterial mindestens irgendeines ist, das von der Gruppe ausgewählt ist, die aus geschäumtem Nickelmetall, einem Nickelmetallgewebe, vernickeltem Stanzmetall, Metall, wie beispielsweise Streckmetall und dergleichen, vernickeltem Schaumharz, wie beispielsweise Urethan und dergleichen, vernickeltem porösem Material, das aus Polyethylen, Polypropylen, Nylon, Baumwolle, Kohlenstofffasern und dergleichen hergestellt ist, vernickelten anorganischen Fasern, die aus Siliciumdioxid, Aluminiumoxid und dergleichen hergestellt sind, vernickelten organischen Fasern, vernickeltem Filz und vernickelter Folie, die aus einem anorganischen Stoff, wie beispielsweise Glimmer, hergestellt ist, besteht.

## Revendications

1. Batterie tridimensionnelle de type électrique dans laquelle :
un séparateur en forme de soufflet (46) est positionné entre un collecteur de courant de cathode (48) et un collecteur de courant d'anode (50) qui sont disposés l'un en face de l'autre de manière à venir près des collecteurs de courant de manière alternée,
soit de la poudre soit un produit de formation d'une matière active de cathode (40) est versé, conjointement avec une solution électrolytique, dans un espace défini par le séparateur en forme de soufflet (46) et le collecteur de courant de cathode (48),
soit de la poudre soit un produit de formation d'une matière active d'anode (42) est versé, conjointement avec une solution électrolytique, dans un espace défini par le séparateur en forme de soufflet (46) et le collecteur de courant d'anode (50), et
les matières actives de cathode (40) et les matières actives d'anode (42) sont versées de manière alternée, les unes en face des autres à travers le séparateur (46),
**caractérisée en ce qu'**un collecteur de courant perméable aux ions (44) est disposé à l'intérieur des matières actives de cathode et d'anode (40, 42).

2. Batterie tridimensionnelle de type électrique selon la revendication 1, dans laquelle le collecteur de courant perméable aux ions (44) est disposé sur une surface des matières actives de cathode et d'anode (40, 42) et à l'intérieur de celles-ci.

3. Batterie tridimensionnelle de type électrique selon la revendication 1 ou la revendication 2, dans laquelle le collecteur de courant perméable aux ions (44) est constitué d'une matière qui présente des vides dans celle-ci, laquelle permet le passage d'ions, et qui présente des propriétés conductrices électriques, et la matière de collecteur de courant perméable aux ions est au moins une matière quelconque choisie parmi le groupe constitué d'un nickel métallique expansé, d'un treillis de nickel métallique, d'un métal de poinçonnage nickelé, d'un métal tel qu'un métal expansé et analogue, d'une résine expansée nickelée telle que de l'uréthanne et analogue, d'une matière poreuse nickelée constituée de polyéthylène, de polypropylène, de nylon, de coton, de fibres de carbone et analogue, de fibres inorganiques nickelées constituées de silice, d'alumine et analogue, de fibres organiques nickelées, d'un feutre nickelé, et d'un film nickelé constitué d'une substance inorganique telle que du mica.
